# EUROPÄISCHE PATENTANMELDUNG

(11) **EP 1 884 342 A2**
(43) Veröffentlichungstag der Anmeldung: **06.02.2008**
(21) Anmeldenummer: 07013755.9
(22) Anmeldetag: 13.07.2007
(51) Int. Cl.: B29C 49/04, B29C 49/32

(54) **Vorrichtung und Verfahren zur Herstellung von Hohlkörpern aus thermoplastischen Kunststoffen im Blasverfahren**

(30) Priorität: 03.08.2006 DE 102006036644
(71) Anmelder: BEKUM Maschinenfabriken GmbH, 12107 Berlin (DE)
(72) Erfinder: Mehnert, Gottfried, 14195 Berlin (DE)
(74) Vertreter: Flosdorff, Jürgen

(57) **Zusammenfassung**

Die Blasmaschine mit einer Vorformlingsstation (1,2,3), an der wenigstens ein Extruder mit wenigstens einem nachgeschalteten Schlauchkopf angeordnet ist, mit wenigstens einer Blasstation (7) an der eine Blaseinrichtung mit wenigstens einem Blas- und Kalibierdorn angeordnet ist, und wenigstens einem Formensystem mit einer Blasform, die unter dem wenigstens einen Schlauchkopf angeordnet wird, um den aus dem wenigstens einen Schlauchkopf ausgepressten warmplastischen Schlauch zwischen die geöffneten Formhälften aufzunehmen, wobei die Blasform nach dem Schließen der Formhälften in die Blasstation gefahren wird, ist dadurch gekennzeichnet, dass die Blasstation frontal vor der Vorformlingsstation und parallel zu dem Formensystem angeordnet ist. Diese Ausbildung hat zur Folge, dass die Fahrwege des Formensystems von der Vorformlingsstation zur Blasstation und zurück minimiert werden können, wodurch die Zykluszeiten der Blasmaschine erheblich verringert sind.

## Beschreibung

Die Erfindung richtet sich auf eine Blasmaschine und auf ein Verfahren zur Herstellung von Hohlkörpern aus thermoplastischen Kunststoffen im Blasverfahren, bei dem "in einer Wärme" gearbeitet wird. Bei diesem wird ein aus der Düse eines einem Extruder nachgeschalteten Schlauchkopfes kontinuierlich oder diskontinuierlich ausgepreßter, von einer vorher geöffneten Blasform beim Schließen der Formteile ergriffener warmplastischer Schlauch vom Nachschub getrennt und danach durch Einführen eines Blasmediums in das in der Form befindliche "Vorformling" genannte Schlauchstück aufgeblasen und gegen die Formmuldenwand gepreßt. Wenn auf diese Weise Vorformlinge aus einem ausgepreßten Schlauch gebildet werden, der aus dem aus einem Extruder stammenden Material im Schlauchkopf geformt wird, spricht man - im Unterschied zum Spritz-Blasen - vom "Extrusionsblasen".

Ein viel angewendetes Verfahren dieser Art setzt sich aus folgenden Schritten zusammen: Aus der Düse des den warmplastischen Schlauch formenden Schlauchkopfes wird ein Schlauch zwischen die geöffneten Teile einer Blasform ausgepreßt, und wenn er die erforderliche Länge erreicht hat, schließt sich die Form um dieses dann den Vorformling abgebende Schlauchstück, das danach vom Nachschub getrennt wird. Die geschlossene Form mit dem Vorformling wird danach parallel in Richtung der Formtrennebene aus dieser Schlauch- oder Vorformlingsstation heraus in eine Blasstation gefahren, in der in ein in der Form offengehaltenes Ende des Vorformlings von oben ein Blas- und Kalibrierdorn eingefahren wird. Meist wird dabei gleichzeitig einerseits durch den Blasdorn das Blasmedium in den Vorformling zu dessen Ausweitung bis zur Anlage an die Formmuldenwandung eingeführt und andererseits durch entsprechende Formgebung des Dornes die Füll- und Entleerungsöffnung des Hohlkörpers, meist ein sogenannter "Hals", durch Preßformen zwischen einem entsprechenden Teil der Formnestwandung und dem Umfang des Blasdorns ausgeformt.

Während der Vorformling in der geschlossenen Form in der Blasstation zum Hohlkörpers ausgeformt und anschließend mittels in die Form eingearbeiteter Kühlkanäle abgekühlt wird, tritt bereits ein neues Schlauchstück aus der Schlauchkopfdüse in der Vorformlingsstation aus. Dieser Vorgang kann zeitlich so mit der Ausformung und Abkühlung sowie Entnahme des fertig geblasenen Hohlkörpers in der Blasstation abgestimmt werden, daß ein Vorformling gerade richtiger Länge in der Vorformlingsstation vorhanden ist, wenn die geöffnete Form aus der Blasstation in die Vorformlingsstation zur Aufnahme eines neuen Vorformlings zurückgefahren ist. Dieses Verfahren wird auch "Shuttle-Verfahren" oder "Verfahren mit Obenkalibrierung" bzw. "Obenblasen" genannt.

Bei Verfahren der genannten Art zur Herstellung von Hohlkörpern aus Kunststoff durch das Aufblasen eines Vorformlings in einer Blasform nennt man die Zeit, die von der Aufnahme eines Vorformlings in der Blasform bis zur folgenden Aufnahme eines neuen Vorformlings in der gleichen Form verstreicht, die Zykluszeit.

Um den Ausstoß einer Blasmaschine zu erhöhen, ist es bekannt, die Anzahl der parallel nebeneinanderliegenden Kavitäten innerhalb eines Formensystems zu erhöhen, was dazu führt, daß sich die Schließplatten zur Aufnahme der Blasformen verbreitern. Bedingt dadurch werden bei herkömmlichen Blasmaschinen auch die Fahrwege des Formensystems von der Schlauchkopfposition zur Blasstation wesentlich vergrößert, was die Zykluszeiten einer Blasanlage der eingangs beschriebenen Art wesentlich verlängert.

Aufgabe der Erfindung ist es, eine Vorrichtung und ein Verfahren zur Herstellung von Hohlkörpern aus Kunststoffen anzugeben, mit der bzw. dem Hohlkörper unter merklicher Verkürzung der Zykluszeit gegenüber dem vorerwähnten Verfahren hergestellt werden können.

In bevorzugten Ausführungsformen soll zur Erhöhung der Flexibilität derartiger Blasanlagen sowohl mit "Obenblasen" oder "Untenblasen" als auch mit beidem gemeinsam und gleichzeitig im sogenannten "Tandemblasen" produziert werden können.

Die Aufgabe wird erfindungsgemäß durch die Merkmale der Patentansprüche 1 und 12 gelöst.

Vorteilhafte Ausgestaltungen der Erfindung sind in den Unteransprüchen gekennzeichnet.

Die Erfindung sieht vor, daß die Blasstation der Blasmaschine frontal vor der Vorformlingsstation angeordnet ist, vorzugsweise derart, daß das Formensystem mit der Blasform senkrecht, d.h. im rechten Winkel zur Formtrennebene zwischen der Vorformlingsstation und der Blasstation verfahrbar ist. Dabei ist der Abstand zwischen der Vorformlingsstation und der Blasstation vorzugsweise minimal und lediglich durch die geometrischen Abmessungen des wenigstens einen Schlauchkopfs (oder der auf einer Linie nebeneinander angeordneten Schlauchköpfe) und der Blaseinrichtung vorgegeben.

Diese Ausbildung hat zu Folge, daß die Fahrwege des Formensystems von der Vorformlingsstation zur Blasstation und zurück minimiert sind, wodurch die Zykluszeiten der erfindungsgemäßen Blasmaschine erheblich verringert sind.

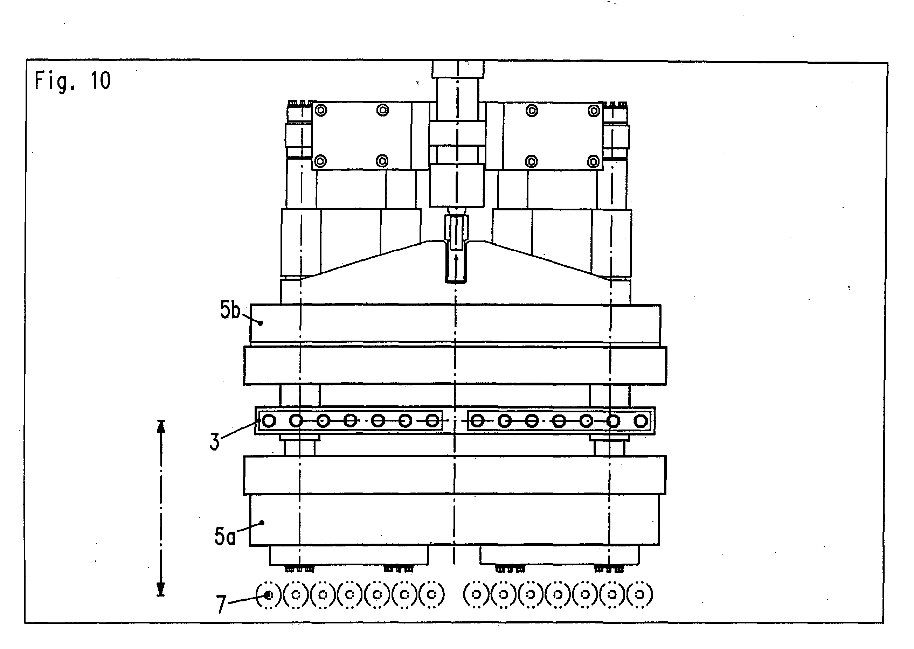

Insbesondere dann, wenn zwei Formensysteme vorgesehen sind, die wechselweise zwischen der gemeinsamen Vorformlingsstation und den beiden zugehörigen Blasstationen verfahrbar sind, sind die Blasstationen derart frontal vor der Vorformlingsstation angeordnet, daß sie schräg zur Formtrennebene verfahren werden. Dies läßt sich durch zwei senkrecht zueinander stehende, übereinander angeordnete hydraulische Schlittenantriebe bewerkstelligen, wie schematisch im Bewegungsdreieck der Figuren 10 bis 12 dargestellt ist.

Weiter sieht die Erfindung vor, daß die Blaseinrichtung wenigstens eine stationär angeordnete Obenblaseinrichtung sein kann. Hierzu wird mit Vorteil vorgeschlagen, daß die Blaseinrichtung soweit anhebbar ist, daß der wenigstens eine an dem Blas- und Kalibrierdorn gehaltene aufgeblasene Hohlkörper (meist die auf mehreren auf einer Linie angeordneten Blas- und Kalibrierdornen gehaltenen aufgeblasenen Hohlkörper) das Verfahren der Blasform zur Vorformlingsstation nicht behindert.

Die Blaseinrichtung kann auch wenigstens eine stationär angeordnete Untenblaseinrichtung sein, wobei in vorteilhafter Ausgestaltung dann vorgesehen sein kann, daß diese soweit absenkbar ist, daß das Verfahren der Blasform zur Vorformlingsstation durch den oder die aufgeblasenen Hohlkörper nicht behindert wird.

In einer weiteren Ausführungsform kann vorgesehen sein, daß die Blaseinrichtung sowohl wenigstens eine stationär angeordnete Obenblaseinrichtung als auch eine wenigstens stationär angeordnete Untenblaseinrichtung aufweisen kann, was die Ausbildung von jeweils zwei übereinander angeordneten Hohlkörpern in der Blasform ermöglicht.

Wenn bevorzugt zwei Formensysteme von der Vorformlingsstation aus schräg zur Formtrennebene verfahrbar sind, sind die zwei zugehörigen Blasstationen nicht direkt frontal vor der Vorformlingsstation, sondern seitlich nach rechts und nach links versetzt angeordnet. Hierbei handelt es sich um eine sogenannte "Doppelshuttlemaschine". Grundsätzlich kann auch ein einziges Formensystem schräg zur Formtrennebene zu einer frontalen, dabei seitlich versetzten Blasstation verfahrbar sein.

Das erfindungsgemäße Verfahren sieht vor, daß die wenigstens eine Blasform der Blasmaschine nicht - wie dies beim Stand der Technik üblich ist - parallel zu ihrer Formtrennebene (in der Stirnansicht auf die Vorformlingsstation nach rechts oder nach links) verfahren wird, sondern die Blasform wird senkrecht oder schräg zu ihrer Formtrennebene zu der direkt frontal oder seitlich versetzt vor der Vorformlingsstation angeordnete Blasstation verfahren, wodurch der zurückzulegende Weg und damit die Zykluszeit erheblich verringert ist. Die Blasund Kalibrierdorne werden vorteilhafterweise mit den daran gehaltenen aufgeblasenen Hohlkörpern an der Blasstation bei einer Obenblaseinrichtung soweit angehoben und im Falle einer Untenblaseinrichtung soweit abgesenkt, daß die geöffnete Blasform unter die Schlauchköpfe der Vorformlingsstation zurückgefahren werden können. Aus den Schlauchköpfen können die warmplastischen Schläuche entweder kontinuierlich oder diskontinuierlich ausgepreßt werden. Der Extruder mit dem Schlauchkopf kann in einem Bogen oder auf gerader vertikaler Bahn nach oben und nach unten bewegbar angeordnet sein.

Nachfolgend werden Ausführungsformen der erfindungsgemäßen Blasmaschine mit Bezug auf die beigefügten Zeichnungen beschrieben. Dabei zeigen:
- Figuren 1 bis 3: Eine Ausführungsform der Blasmaschine mit Obenblaseinrichtung:
- Figur 1: Formensystem geöffnet, bewegliches Formensystem in Position Schlauchkopf, Obenblaseinrichtung hochgefahren,
- Figur 2: Formensystem geschlossen, bewegliches Formensystem in Position Schlauchkopf, Trenneinrichtung trennt Schlauch vom in der Form eingespannten Vorformling, Extruder bereit zum vertikalen Abheben,
- Figur 3: Formensystem geschlossen, bewegliches Formensystem in Position Blaseinrichtung, Obenblaseinrichtung in den Vorformling eingefahren, Extruder vertikal abgehoben.
- Figuren 4 bis 6: Eine Ausführungsform der Blasmaschine mit Untenblaseinrichtung:

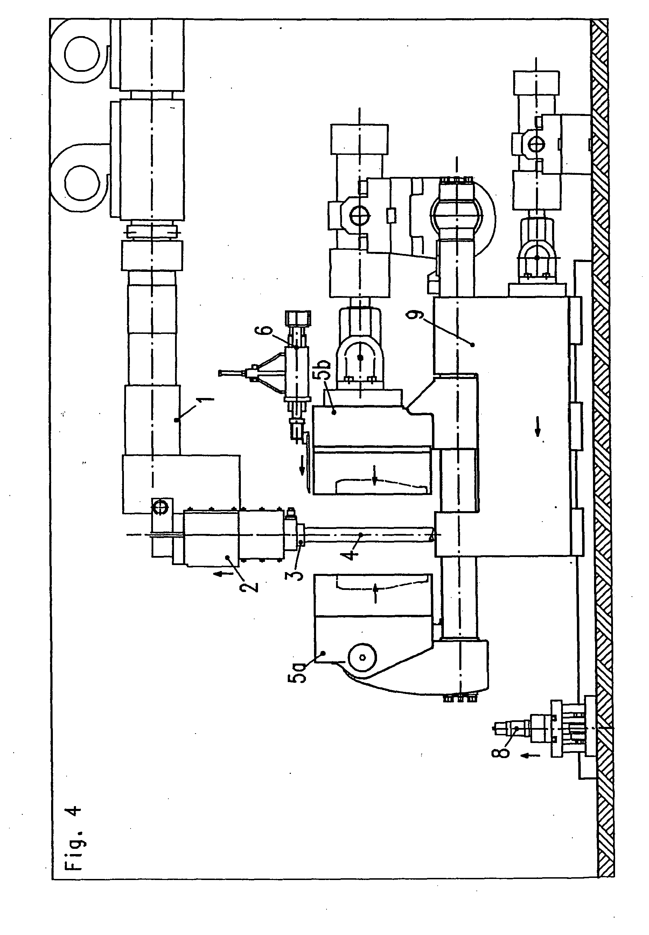

- Figur 4: Formensystem geöffnet, bewegliches Formensystem in Position Schlauchkopf, Untenblaseinrichtung nach unten gefahren,

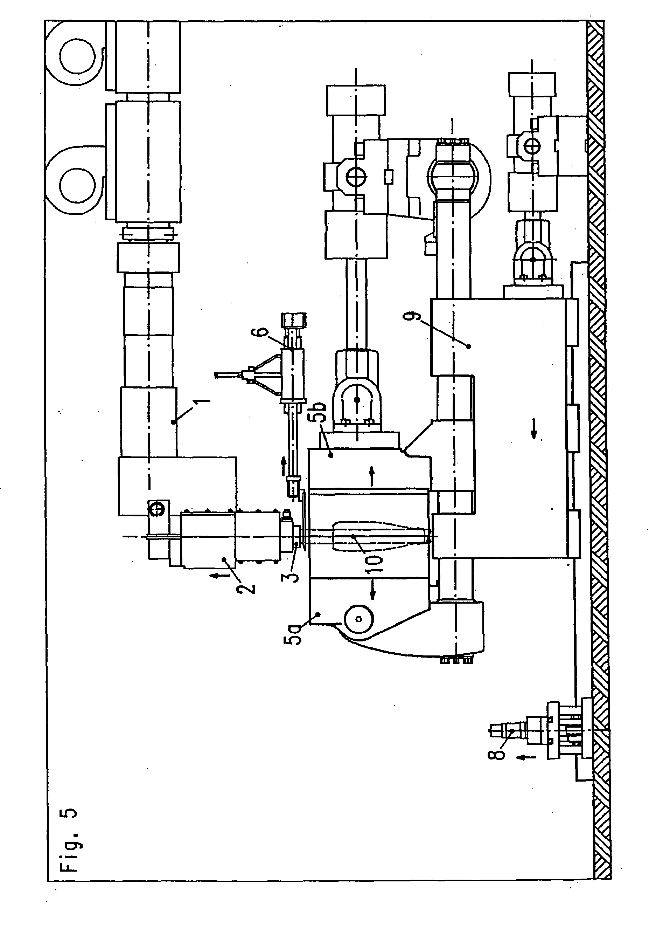

- Figur 5: Formensystem geschlossen, bewegliches Formensystem in Position Schlauchkopf, Trenneinrichtung trennt Schlauch vom in der Form eingespannten Vorformling, Extruder bereit zum vertikalen Abheben,

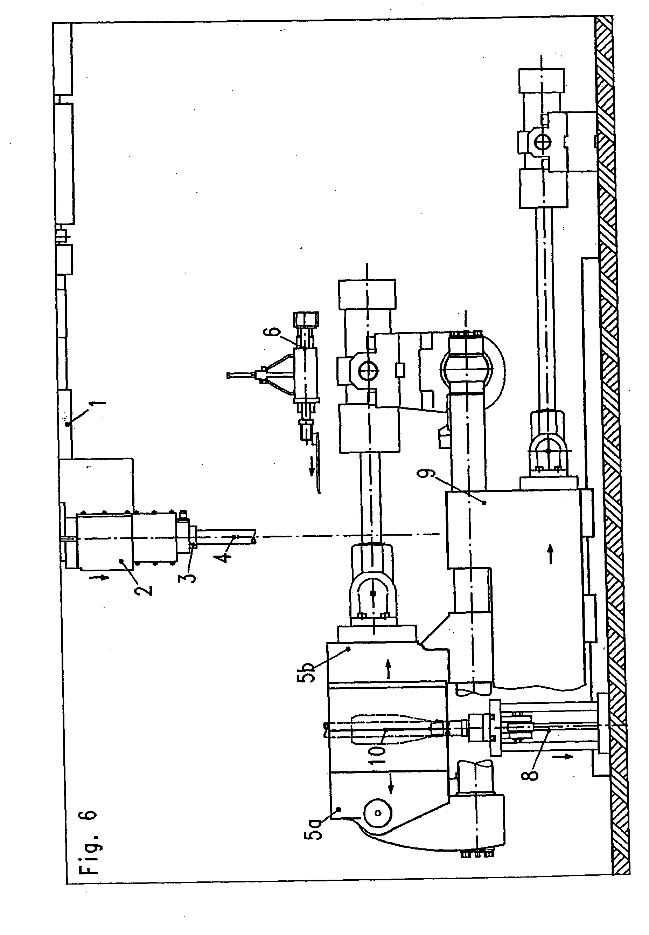

- Figur 6: Formensystem geschlossen, bewegliches Formensystem in Position Blaseinrichtung, Untenblaseinrichtung in den Vorformling eingefahren, Extruder vertikal abgehoben;

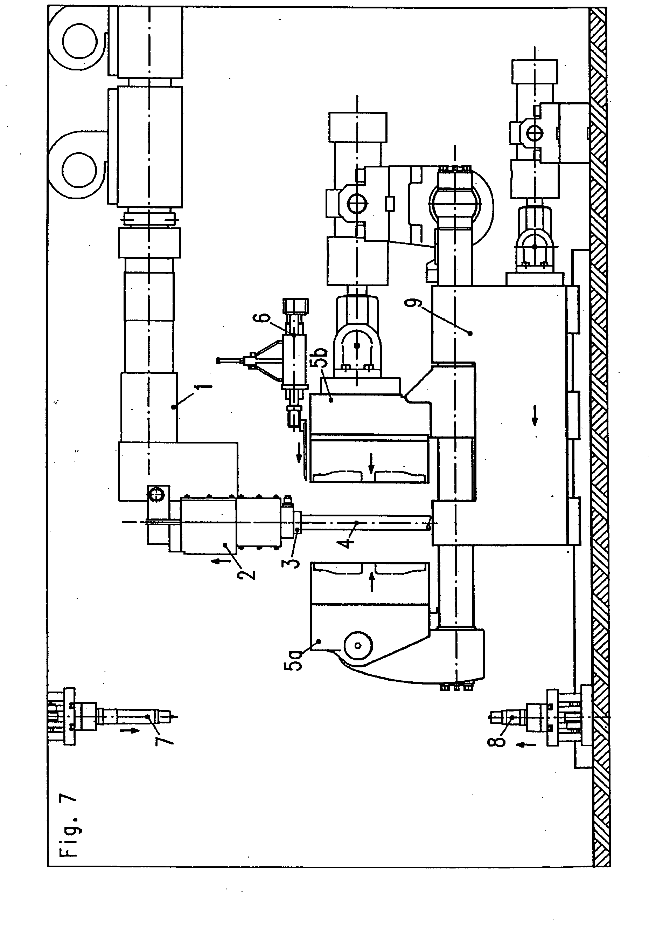

- Figuren 7 bis 9: Eine Ausführungsform der Blasmaschine mit Oben- und Untenblaseinrichtung:
- Figur 7: Formensystem geöffnet, bewegliches Formensystem in Position Schlauchkopf, Obenblaseinrichtung hochgefahren, Untenblaseinrichtung nach unten gefahren,

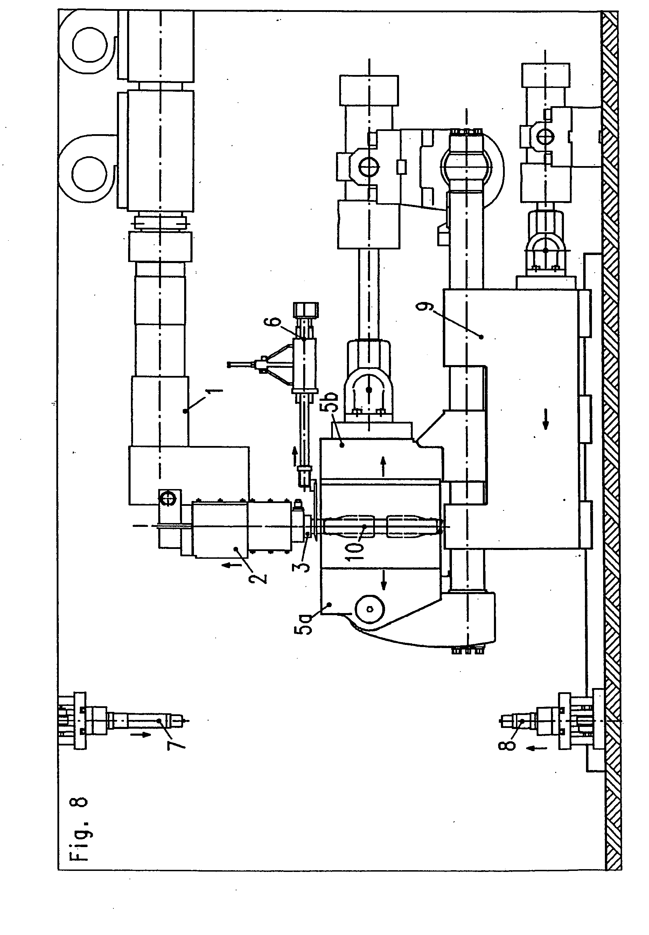

- Figur 8: Formensystem geschlossen, bewegliches Formensystem in Position Schlauchkopf, Trenneinrichtung trennt Schlauch vom in der Form eingespannten Vorformling, Extruder bereit zum vertikalen Abheben,

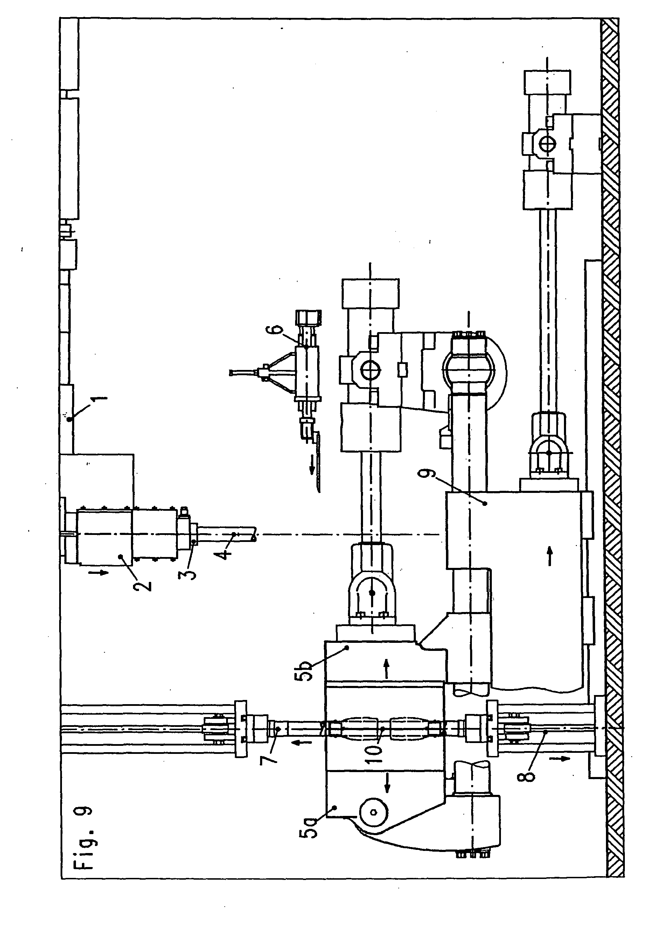

- Figur 9: Formensystem geschlossen, bewegliches Formensystem in Position Blaseinrichtung, Obenblaseinrichtung und Untenblaseinrichtung in den Vorformling eingefahren, Extruder vertikal abgehoben,

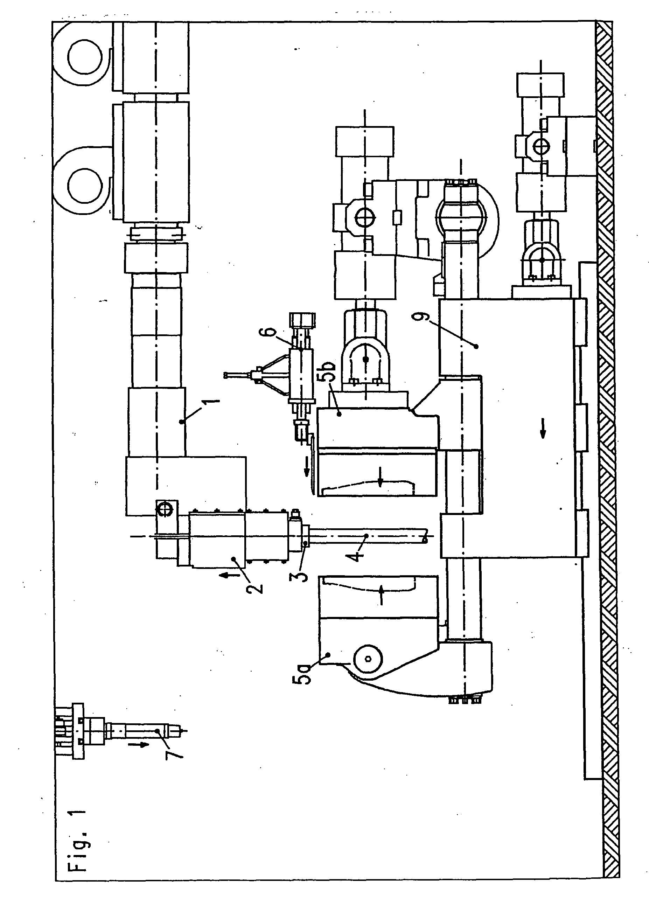

- Figur 10: Eine Draufsicht auf Figur 1, dargestellt ohne Extruder in der Variante Obenblaseinrichtung,

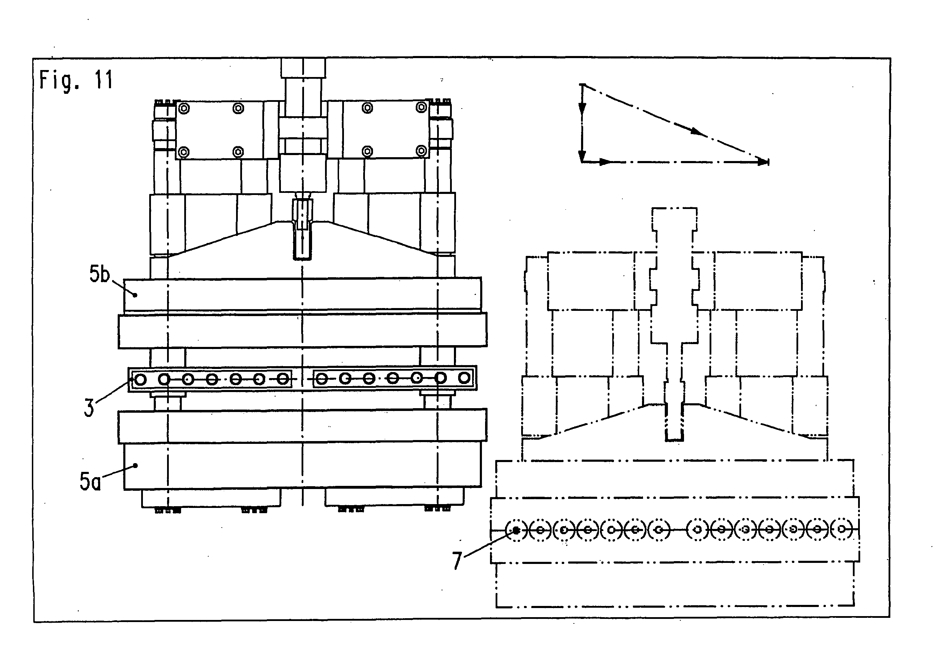

- Figur 11: Eine Draufsicht darstellend das generelle Prinzip einer Einseitenmaschine (Einfachshuttlemaschine), dargestellt ohne Extruder in der Variante Obenblaseinrichtung,

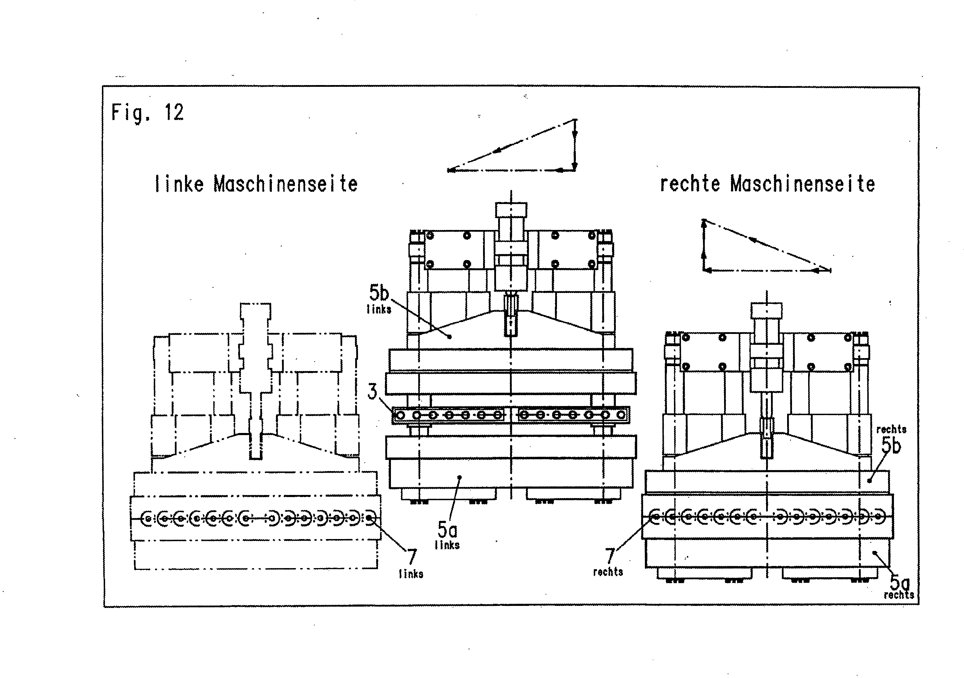

- Figur 12: Eine Draufsicht darstellend das generelle Prinzip einer Zweiseitenmaschine (Doppelshuttlemaschine), dargestellt ohne Extruder in der Variante Obenblaseinrichtung.

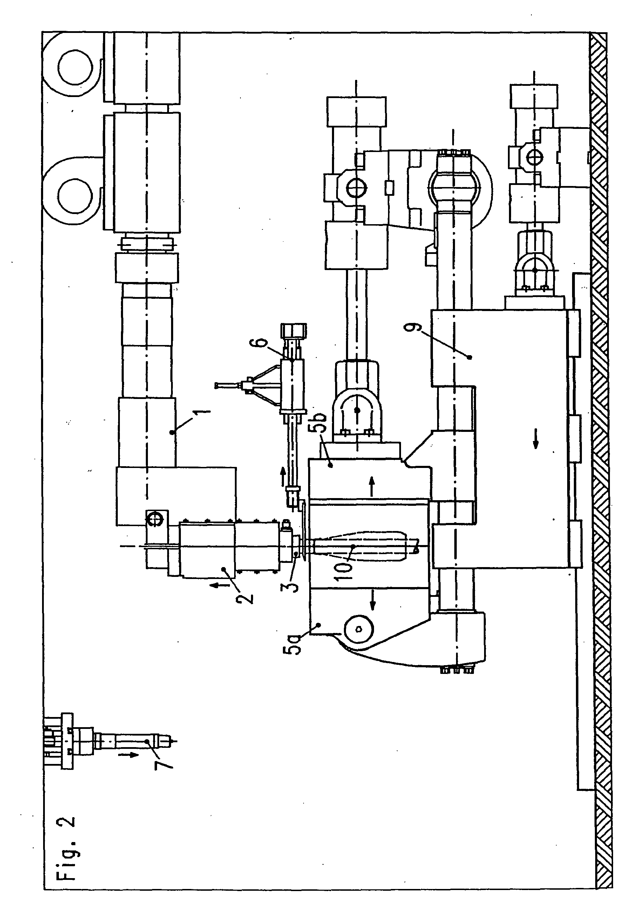

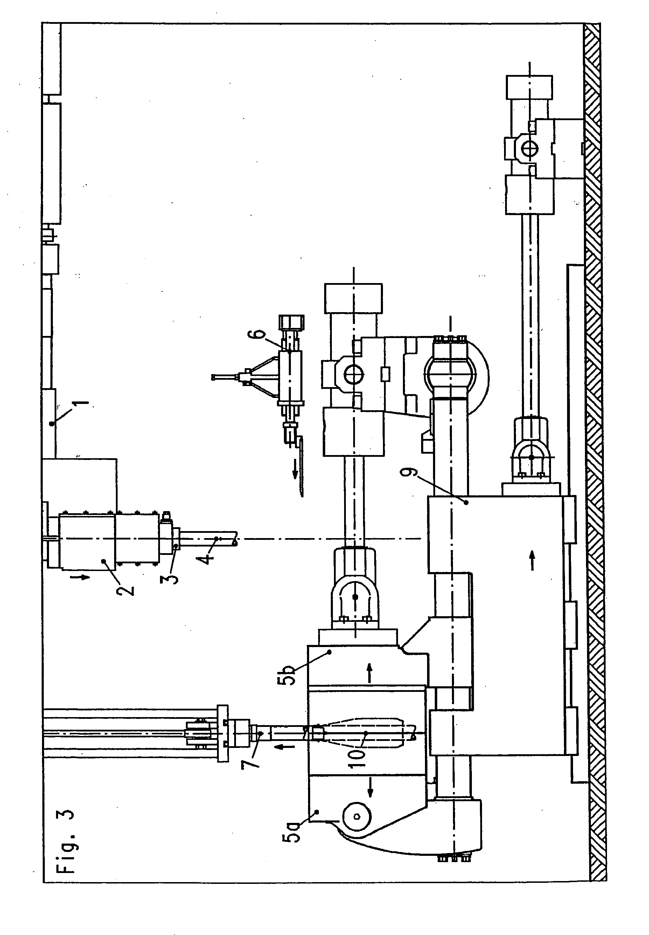

### Beispiel 1, dargestellt in den Figuren 1 bis 10:

Der dem Extruder 1 nachgeschaltete Schlauchkopf 2 enthält eine oder eine Vielzahl von auf einer Linie liegenden Schlauchdüsen 3, über die der aus thermoplastischem Kunststoff bestehende Schlauch 4 kontinuierlich oder aber auch diskontinuierlich ausgepreßt wird.

Nach Erreichen der erforderlichen Länge des Schlauchs 4 für den zu fertigenden Artikel schließt das unterhalb des Schlauchkopfes 2 angeordnete Formensystem 5 - das in Linie zu den Schlauchdüsen 3 ausgerichtet ist - um diese dann den oder die den "Vorformling 10" abgebende Schlauchstücke 4, das oder die danach vom Nachschub abgetrennt werden. Die geschlossene Form 5a, 5b mit dem oder den Vorformlingen 10 wird danach rechtwinklig zur Formtrennebene um eine minimal mögliche Distanz verfahren, die lediglich die geometrischen Abmessungen des Schlauchkopfs 2 und der in Endposition des Fahrweges des Formensystems stationär angeordneten Obenblaseinrichtung 7 berücksichtigt, unabhängig davon, wie viele parallel zueinander angeordnete Kavitäten aufgebaut sind.

In einer zusätzlichen Variante im Falle der gleichzeitig eingesetzten Untenblaseinrichtung 8 befindet sich diese auf gleicher Linie unterhalb des Formensystems 5. Gleichzeitig mit dem "Trennen vom Nachschub" wird im Falle einer kontinuierlichen Extrusion der Extruder 1 nach oben angehoben, um Freiheit für die Förderung eines neuerlichen Schlauchs 4 erforderlicher Länge für den zu fertigenden Artikel sicher zu stellen.

Nachdem das Formensystem seine Stellung konträr zu der Schlauchdüsenposition erreicht hat, fährt die Obenblaseinrichtung 7 oder die Untenblaseinrichtung 8 oder beide Einrichtungen gleichzeitig in ein in der Form offengehaltenes Ende des Vorformlings 10 ein, um den Artikel in bekannter Weise unter Einsatz eines Blasmediums auszuformen.

Während der Vorformling 10 in der geschlossenen Form 5 in dieser Stellung des Formensystems zum Hohlkörper ausgeformt und anschließend mittels in die Form eingearbeiteter Kühlkanäle abgekühlt wird, tritt bereits im Falle des kontinuierlichen Extrusion ein neues Schlauchstück 4 aus der oder den Schlauchkopfdüsen 3 aus. Dieser Vorgang kann zeitlich so mit der Ausformung und Abkühlung sowie - nicht Bestandteil der Anmeldung - Entnahme des oder der fertig geblasenen Hohlkörper in der Blasform 5 abgestimmt werden, daß ein Vorformling 10 gerade richtiger Länge in der Vorformlingsstation vorhanden ist, wenn die geöffnete Form 5 aus ihrer vorgezogenen Stellung in die Vorformlingsstation zur Aufnahme eines neuen Vorformlings 10 zurückgefahren ist und das Extrudersystem wieder abgesenkt wurde.

### Beispiel 2, dargestellt in den Figuren 11 und 12:

Der dem Extruder 1 nachgeschaltete Schlauchkopf 2 enthält eine oder eine Vielzahl von Schlauchdüsen 3, über die der aus thermoplastischem Kunststoff bestehende Schlauch kontinuierlich oder aber auch diskontinuierlich ausgepreßt wird. Nach Erreichen der erforderlichen Länge des Schlauchs für den zu fertigenden Artikel schließt das unterhalb des Schlauchkopfes 2 angeordnete Formensystem 5 - das in Linie zu den Schlauchdüsen 3 ausgerichtet ist - um diese dann den oder die den "Vorformling" abgebende Schlauchstücke 4, das oder die danach vom Nachschub abgetrennt werden. Die geschlossene Form 5 mit dem oder den Vorformlingen 10 wird danach schräg zu der Blasstation bewegt, wie das Bewegungsdreieck in Figur 11 anzeigt. Die seitliche Wegkomponente ist abhängig von der Breite der eingesetzten Formenaufspannplatte (insbesondere dann, wenn zwei Formensysteme eingesetzt werden).

Nachdem das Formensystem seine seitlich versetzte Stellung vor der Schlauchdüsenposition erreicht hat, fährt die "Obenblaseinrichtung" oder die "Untenblaseinrichtung" oder (im Falle von jeweils zwei übereinander angeordneten Vorformlingen) beide Einrichtungen gleichzeitig in in der Form offengehaltene Enden der Vorformlinge ein, um die Artikel in bekannter Weise, unter Einsatz eines Blasmediums auszuformen.

Während der Vorformling in der geschlossenen Form des Formensystems zum Hohlkörper ausgeformt und anschließend mittels in die Form eingearbeiteter Kühlkanäle abgekühlt wird, tritt bereits im Falle der kontinuierlichen Extrusion ein neues Schlauchstück aus der oder den Schlauchkopfdüsen aus. Dieser Vorgang kann zeitlich so abgestimmt werden, daß ein Vorformling gerade richtiger Länge in der Vorformlingsstation vorhanden ist, wenn ein zweites Formensystem unter die nun frei gewordene Schlauchkopfposition fahren kann. Man spricht dann im Gegensatz zu einer "Einfachshuttlemaschine" von einer "Doppelshuttlemaschine", die in Figur 12 dargestellt ist.

Es wird betont, dass die Erfindung nicht auf die beschriebenen und dargestellten Ausführungsformen beschränkt ist. Vielmehr sind alle offenbarten Merkmale auf jede Weise einzeln miteinander kombinierbar.

### Legende:

- 1: Extruder
- 2: Schlauchkopf
- 3: Schlauchdüse
- 4: Schlauch
- 5: (a,b,) Formensystem
- 6: Trenneinrichtung
- 7: Obenblaseinrichtung
- 8: Untenblaseinrichtung
- 9: bewegliches Formensystem
- 10: Vorformling

## Patentansprüche

1. Blasmaschine mit einer Vorformlingsstation, an der wenigstens ein Extruder mit wenigstens einem nachgeschalteten Schlauchkopf angeordnet ist, mit wenigstens einer Blasstation, an der eine Blaseinrichtung mit wenigstens einem Blas- und Kalibrierdorn angeordnet ist, und wenigstens einem Formensystem mit einer Blasform, die unter dem wenigstens einen Schlauchkopf angeordnet wird, um den aus dem wenigstens einen Schlauchkopf ausgepreßten warmplastischen Schlauch zwischen die geöffneten Formhälften aufzunehmen, wobei die Blasform nach dem Schließen der Formhälften in die Blasstation gefahren wird,
**dadurch gekennzeichnet,**
**daß** die Blasstation frontal vor der Vorformlingsstation und parallel zum Formensystem angeordnet ist.

2. Blasmaschine nach Anspruch 1,
**dadurch gekennzeichnet,**
**daß** die wenigstens eine Blasstation derart frontal vor der Vorformlingsstation angeordnet ist, daß das Formensystem mit der Blasform senkrecht zur Formtrennebene zwischen der Vorformlingsstation und der Blasstation verfahrbar ist.

3. Blasmaschine nach Anspruch 1 oder 2,
**dadurch gekennzeichnet,**
**daß** der Abstand zwischen der Vorformlingsstation und der Blasstation minimal ist und lediglich die geometrischen Abmessungen des wenigstens einen Schlauchkopfes und der Blaseinrichtung berücksichtigt.

4. Blasmaschine nach Anspruch 1,
**dadurch gekennzeichnet,**
**daß** vorzugsweise zwei Blasstationen derart frontal vor der Vorformlingsstation angeordnet sind, daß vorzugsweise zwei Formensysteme mit ihren Blasformen schräg zur Formtrennebene zwischen der Vorformlingsstation und den Blasstationen verfahrbar sind.

5. Blasmaschine nach einem der Ansprüche 1 bis 4,
**dadurch gekennzeichnet,**
**daß** die Blaseinrichtung wenigstens eine stationär angeordnete Obenblaseinrichtung ist.

6. Blasmaschine nach Anspruch 5,
**dadurch gekennzeichnet,**
**daß** die Blaseinrichtung soweit anhebbar ist, daß der wenigstens eine an dem Blas- und Kalibrierdorn gehaltene aufgeblasene Hohlkörper das Verfahren der Blasform zur Vorformlingsstation nicht behindert.

7. Blasmaschine nach einem der Ansprüche 1 bis 4,
**dadurch gekennzeichnet,**
**daß** die Blaseinrichtung wenigstens eine stationär angeordnete Untenblaseinrichtung ist.

8. Blasmaschine nach Anspruch 7,
**dadurch gekennzeichnet,**
**daß** die Blaseinrichtung soweit absenkbar ist, daß der wenigstens eine an dem Blas- und Kalibrierdorn gehaltene aufgeblasener Hohlkörper das Verfahren der Blasform zur Vorformlingsstation nicht behindert.

9. Blasmaschine nach einem der Ansprüche 1 bis 4,
**dadurch gekennzeichnet,**
**daß** die Blaseinrichtung wenigstens eine stationär angeordnete Obenblaseinrichtung und wenigstens eine stationär angeordnete Untenblaseinrichtung aufweist und
**daß** die Obenblaseinrichtung und/oder die Untenblaseinrichtung soweit anhebbar bzw. absenkbar sind, daß die an den Blas- und Kalibrierdornen gehaltenen aufgeblasenen Hohlkörper das Verfahren der Blasform zur Vorformlingsstation nicht behindern.

10. Verfahren zur Herstellung von Hohlkörpern im Blasverfahren,
**dadurch gekennzeichnet,**
**daß** die wenigstens eine Blasform einer Blasmaschine nach Aufnahme wenigstens eines warmplastischen Schlauches an einer Vorformlingsstation senkrecht oder schräg zu ihrer Formtrennebene zu wenigstens einer frontal vor der Vorformlingsstation angeordneten Blasstation verfahren wird.
